# EUROPEAN PATENT APPLICATION

(11) **EP 1 401 236 A1**
(43) Date of publication of application: **24.03.2004**
(21) Application number: 02020321.2
(22) Date of filing: 11.09.2002
(51) Int. Cl.: H04R 1/10, H04M 1/03

(54) **Transducer mounting element and method**

(71) Applicant: SIEMENS AKTIENGESELLSCHAFT, 80333 München (DE)
(72) Inventor: Jensen, Rene Eske, 9310 Vodskov (DK); Larsen, Clemen Boje, 9000 Aalborg (DK); Lykke, Peter, 9000 Aalborg (DK); Sorensen, Svend Erik, 9200 Aalborg SV (DK)

(57) **Abstract**

An adapter for mounting a transducer onto a housing of a device includes i) a first mounting part adapted to mount the adapter into the vicinity of an acoustically well conductive part of the housing, ii) a punctured part for enabling the passage of sound waves to/from the transducer from/to the exterior of the device, and iii) a second mounting part for mounting the transducer to the adapter. The advantage obtained by using such an adapter is that the development time of a new product is shortened, because the adapter can be redesigned before the complete shape of the device is complete, as long as the interface area between the loudspeaker adapter and the housing does not change.

## Description

### Field of the invention

The invention relates generally to the mounting of transducers such as loudspeakers or microphones, and, more specifically, to the mounting of such elements into portable devices.

### Background of the invention

Current methods for mounting a loudspeaker demand that the loudspeaker is fixed on a specific place of the housing of the device into which it is going to be fixed. If the housing is going to moulded, the mould corresponding to the model of the housing has to be finished before the serial production may begin. From an acoustic engineer point of view, the complete design of the front part needs to be completed before he or she can verify his design.

The position of the loudspeaker has to be fixed already when designing the form of the housing. This means that the mould has to be redesigned and reconstructed always when there are any changes with the positioning or orienting of the loudspeaker, one essential limitation for the positioning of the loudspeaker being the need to have a hole close to the loudspeaker enabling sound coming out of the housing of the device.

Figure 1A shows a loudspeaker mounting mechanism according to published patent applications GB 2 225 192 A and EP 0 453 061 A2. The loudspeaker 12 is mounted to the housing 11 using a mounting part 13 which is fixed in the housing 11. The housing 11 has also an acoustically more conductive part 14 which has punctures in the housing for allowing easy passage of the sound waves.

Figure 1B shows another loudspeaker mounting system according to the published patent application EP 0 166 198 A2. In the '198 solution, a removable adapter 15 is used for holding a loudspeaker 12. The adapter 15 is fixed to the bottom part 16 of the housing using fingers 17' which stick to the corresponding fingers 17 that are located in the bottom part 16 of the housing.

The loudspeaker 12 is positioned into the adapter 15. The top part 11 of the housing is fixed to support the loudspeaker 12. Such a mechanism is nevertheless too complicated to be applied for thin, portable devices such as mobile terminals.

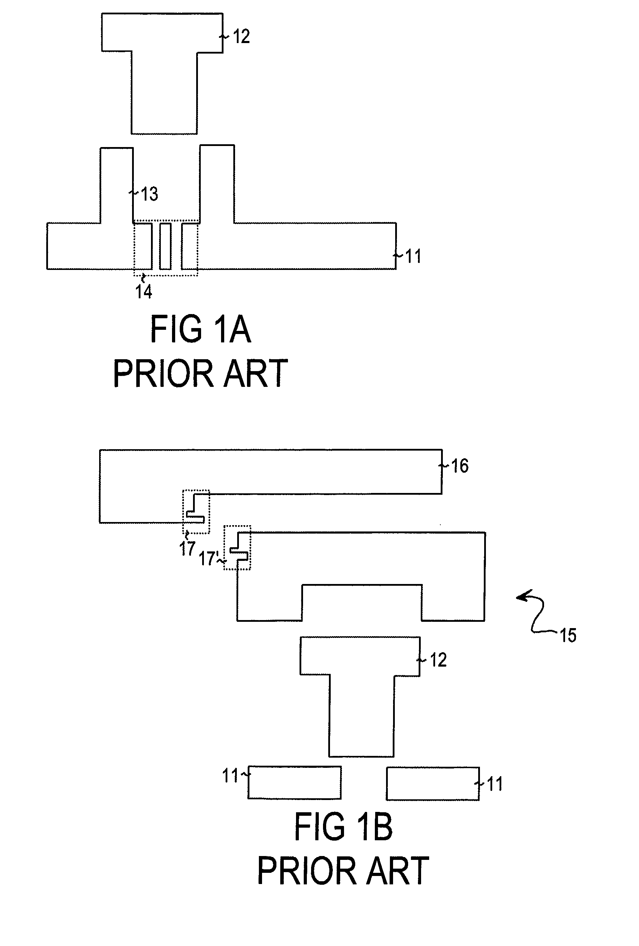

One method for fixing a loudspeaker has also been described in the US patent 5,923,750. An adapter consisting of two parts is fixed on the back side of the loudspeaker much in a similar manner like in Figure 1B.

In most modern mobile terminals a solution according to Figure 1A is used. The solution according to Figure 1B is neither possible nor practical, because the device has to be as thin as possible whilst the voice quality has to be as good as possible. In an ordinary mobile terminal there is also no separate speaker handset, but the mobile phone comprises one or more circuit boards so the inside of the housing is pretty full of different hardware components.

In the design of new mobile terminals good enough voice quality sets high demands for the positioning and sealing of the loudspeaker. On one hand, the loudspeaker should be placed into an acoustically favourable position, but the design does not necessarily always allow that. This is why acoustic and the design strongly depend on each other. It is also possible that the shape of the device has to be redesigned few times which makes the design of new mobile terminals much more expensive and slower.

The displays of the mobile terminals have also grown and the keypad may also at least in some models take lots of space. These parts of the devices have a specific effect on the acoustical design, because the slit between the display window and the housing can cause lots of acoustical problems. Similarly, it the device is a mobile terminal, any other slits between other elements of the mobile terminal may be problematic.

For example, when the loudspeaker is positioned over the slit between the display and the housing in order to maximise the comfort of use, it is extremely difficult to make a proper sealing for the loudspeaker, because the slit between the display and the housing can easily be a few tenths of a millimetre. Also with the microphone there are similar problems, for example, when the microphone is located close to the keypad. Also one reason for problems is that behind the display there usually are printings which also make it almost impossible to integrate the loudspeaker together with the display, i.e. place the loudspeaker into the vicinity of the display.

It is an object of the invention to bring about a solution with which the sealing of the loudspeaker can be obtained simply and in a simple and cost-effective manner.

### Summary of the invention

These and other objectives of the invention are accomplished in accordance with the principles of the present invention as described in the patent claims.

An adapter for mounting a transducer onto a housing of a device includes i) a first mounting part adapted to mount the adapter into the vicinity of an acoustically well conductive part of the housing, ii) a punctured part for enabling the passage of sound waves to/from the transducer from/to the exterior of the device, and iii) a second mounting part for mounting the transducer to the adapter. An advantage obtained by using such an adapter is, that the development time of a new product can be shortened, because the adapter can be redesigned before the complete shape of the device is complete, as long as the interface area between the loudspeaker adapter and the housing does not change.

A method for fastening a transducer on a housing of a device, comprises the steps of: i) mounting an adapter to vicinity of an acoustically well conductive part of the housing, and ii) mounting the transducer to the adapter, the adapter being equipped with a punctured part for enabling the passage of sound waves to/from the transducer from/to the exterior of the device, the punctured part being adapted to match the acoustically well conductive part of the housing. Using such a method, the development time of a new product can be shortened, because the adapter can be redesigned before the complete shape of the device is complete, as long as the interface area between the loudspeaker adapter and the housing does not change.

### Brief description of the drawings

In the following, the invention and its preferred embodiments are described more closely referring to the examples shown in Figure 2 to 4 in the appended drawings wherein:
- Figure 1A: illustrates a prior art solution for a loudspeaker assembly,
- Figure 1B: illustrates a second prior art for loudspeaker assembly,
- Figure 2: illustrates a loudspeaker adapter in accordance with the present invention,
- Figure 3: illustrates a second embodiment of the present invention involving a loudspeaker adapter with load holes for stabilising the acoustical load,
- Figure 4A: illustrates a mobile phone housing with a display in the vicinity of housing before inserting the loudspeaker adapter,
- Figure 4B: illustrates a device of Figure 4A after the loudspeaker adapter has been inserted, and
- Figure 4C: illustrates the system of Figure 4B after the loudspeaker has been installed onto the loudspeaker adapter.

Like reference signs refer to corresponding parts and elements throughout Figures 1-4.

### Detailed description of the invention

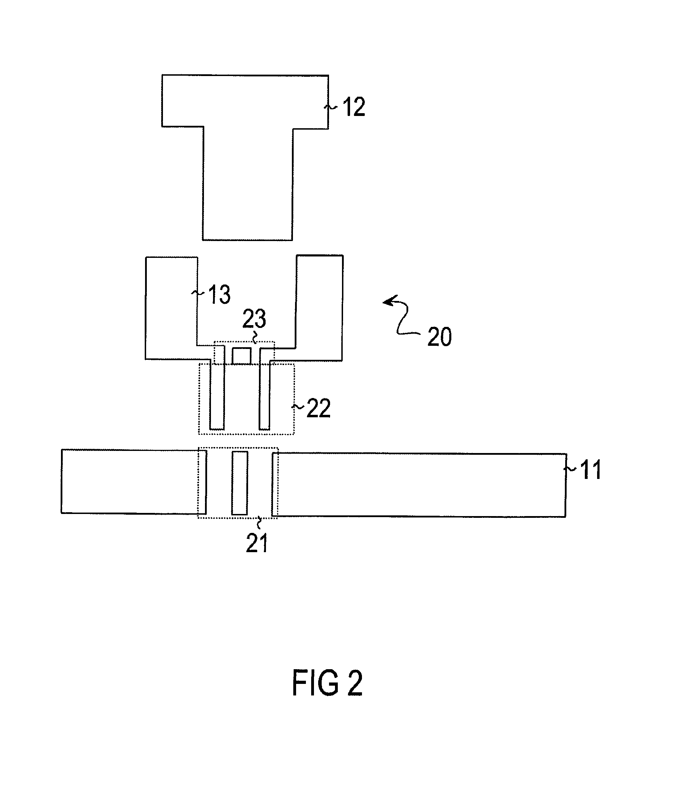

Figure 2 illustrates a loudspeaker adapter in accordance with the present invention. The loudspeaker 12 is to be installed onto a housing 11 of a mobile phone. The housing 11 has holes within the region marked by dotted box 21. The purpose of the holes is twofold.

Firstly, their purpose is to act as an acoustical conduit for some sound waves coming from transducer 12 if the transducer is a loudspeaker, or to act an acoustical passage to the transducer if the transducer is a microphone. In the following, it is assumed that the transducer 12 is a loudspeaker.

Secondly, the purpose of the holes in the region 21 is to act as responsive attaching means for fingers marked by the dotted box 22 of the loudspeaker adapter 20. The fingers 22 stick mechanically into the housing 11 at the region 21.

The loudspeaker adapter 20 has a second mounting part 13 for mounting the transducer 12 to the adapter 20. Between the mounting part 22 and the second mounting part 13 there is an area 23 marked with a dotted box. The area 23 includes holes for the sound waves to pass. For the loudspeaker 12 the holes in the region 23 enable the sound waves to exit the loudspeaker 12 and to proceed through the area formed by first mounting part 22 and the acoustically well conductive part 21 of the housing 11 to the exterior of the device.

The loudspeaker adapter 20 will shorten the development time of a new product, because it can be redesigned before the complete shape of the device is complete, as long as the interface area between the loudspeaker adapter 20 and the housing 11 does not change. Because the loudspeaker adapter 20 is small and simple, the price for the mould for it will be low. If any changes are necessary, making a completely new mould is inexpensive compared to having to make a new mould for the complete device.

As already discussed, the possible slit between the display window and the housing can cause lots of acoustical problems. Similarly, if the device is a mobile terminal, any other slits between other elements of the mobile terminal may be problematic. These problems can now be avoided by using a loudspeaker adapter 20. Whenever it is necessary for any design reason to have a junction between any two parts at the optimal position of the speaker, the problem probability is high if a loudspeaker adapter 20 is not used. It has turned out very difficult to seal the junction between any two parts, giving leaks in the acoustic design. The leaks are unacceptable in the sense that they easily ruin the acoustical quality of the device.

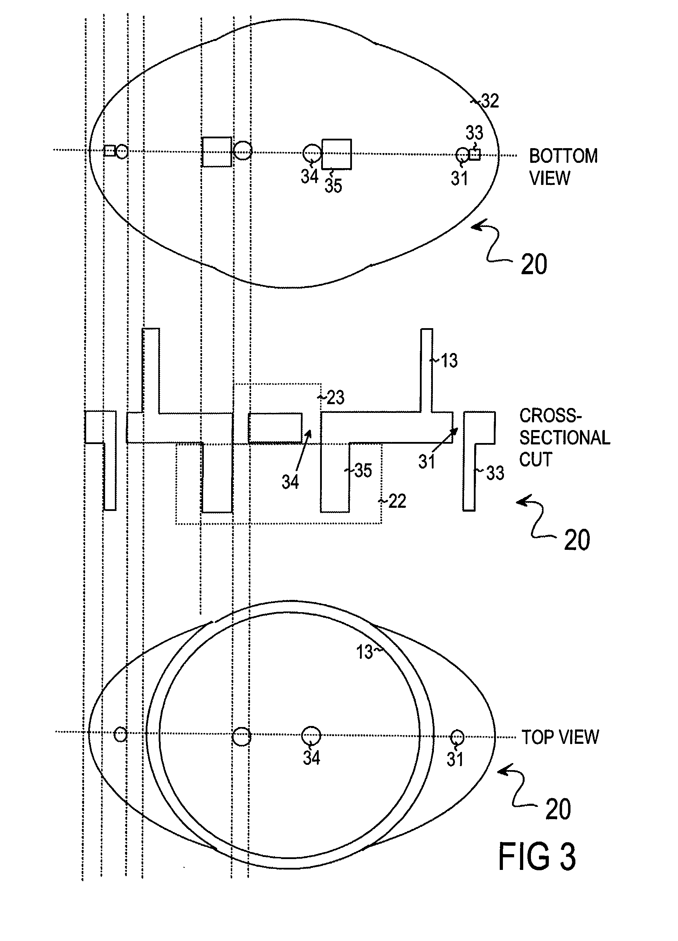

Figure 3 illustrates a second embodiment of the present invention. The bottom 32 of the adapter 20 is made of at least one elastic material such as silicon. The adapter 20 has holes 34 and members 35 for acoustical and mounting purposes. The members 35 constitute the first mounting means 22. The holes 34 constitute the area 23 between the first mounting means 22 and the second mounting means 30.

Further, the adapter includes load holes 31 that stabilise the acoustical load caused by the loudspeaker 12. Preferably, close to the load holes 31 there are attaching members 33 which improve the mechanical fixing of the adapter 20 to the housing 11.

As viewed from top, the adapter 20 has second mounting means 13 which in this case have a shape of a circle in order to accommodate the loudspeaker 12 and seal it properly. The second mounting means 13 may consist of an elastic material such as silicon or rubber. Holes 34 within the area 23 lead through the loudspeaker adapter 23

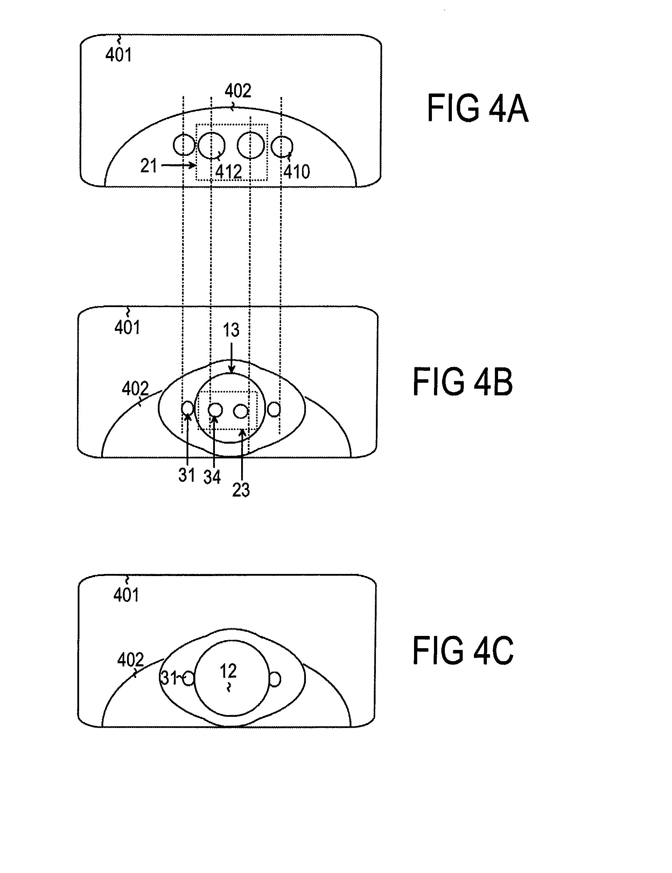

Figure 4A illustrates a mobile terminal which has a housing 401 and a display 402. Typically, the housing 401 consists of moulded plastic, and the display 402 is a liquid crystal display. Between the housing 401 and the display 402 there is a narrow slit. Typically, the width of the slit is few tenths of millimetre thus making it more difficult to obtain a proper sealing for the loudspeaker that is going to be installed on the housing. Part of the transducer membrane is located above the display 402. Further, if the background of the display 402 contains printings such as the displays of some manufacturers do, the printings make the sealing even more challenging.

In order to facilitate the mounting of the speaker, the display has two holes 412 corresponding to the area 21 of the previous examples and again marked with a dotted box. It is not significant that the holes 401 are located in the display 402, but they could be located in the housing 401 as well. Further, the display contains also holes 410 acting as load holes and improving the fastening of the loudspeaker adapter.

Figure 4B shows the system of Figure 4A after the loudspeaker adapter 20 has been installed on the place. Now the holes 34 corresponding to the area marked with dust box 23 are visible. Further, the load holes 34 and 31 are visible. The second mounting means 13 are marked with a circle.

Figure 4C illustrates the composition of Figure 4B after the loudspeaker 12 has been installed. The load holes 31 are still visible. They balance and stabilise the acoustical load by opening a channel from the exterior of the housing to the back side of the loudspeaker 12.

To summarise, the loudspeaker 12 is mounted onto a housing 11 using a speaker adapter 20 which includes i) a first mounting part 22 adapted to mount the speaker adapter 20 into the vicinity of an acoustically well conductive part 21 of the housing 11, ii) a punctured part 23 for enabling the passage of sound waves from the loudspeaker 23 to the exterior of the device, and iii) a second mounting part 13 for mounting the loudspeaker 12 to the loudspeaker adapter 20.

In accordance with one aspect of the present invention, the loudspeaker adapter 20 can be made of at least one elastic material. Further, the loudspeaker adapter 20 may be arranged to provide an acoustical sealing between the housing and a construction element such as a display as into the vicinity of the house.

The loudspeaker adapter 20 can be used for fitting also another kind of transducer, such as a microphone, to any kind of housing 11. Especially well the invention suites for mounting of transducers to small devices having only a limited size and for which the housing is constructed by moulding. Examples of such devices are mobile terminals, personal digital assistants, laptop computers, and so forth.

Although the invention has been described above with reference to the examples shown in the appended drawings, it is obvious that the invention is not limited to these, but it may be modified by those skilled in the art without differing from the scope on the spirit of the invention.

## Claims

1. An adapter (20) for mounting a transducer (12) on a housing (11) of a device
**characterised in that**
the adapter (20) includes:
- a first mounting part (22) adapted to mount the adapter (20) to the vicinity of an acoustically well conductive part (21) of the housing (11);
- a punctured part (23) for enabling the passage of sound waves to/from the transducer (12) from/to the exterior of the device; and
- a second mounting part (13) for mounting the transducer (12) to the adapter (20).

2. Adapter according to claim 1,
wherein: the adapter is made of at least one elastic material.

3. An adapter (20) according to claim 1 or 2
wherein: the bottom (22) of the adapter is arranged to provide acoustic sealing between the housing (11, 401) and a constructing element, such as a display (402), assembled into the vicinity of the housing (11, 401).

4. An adapter (20) according to any one of the preceding claims,
**characterised in that**:
the first mounting part (22) is adapted to mechanically stick in the housing (11).

5. An adapter (20) according to any one of the preceding claims,
**characterised in that**:
the adapter (20) further includes at least one load hole (31) in order to stabilise the acoustical load.

6. A mobile terminal including:
- a housing (11); and
- a transducer (12), the mobile terminal
**characterised in that**
it further includes:
- an adapter (20) for mounting the transducer (12) onto the housing (11), the adapter corresponding to any one of the adapters according to claims 1-5.

7. A mobile terminal according to claim 6,
wherein the adapter (20) is positioned between the front part of the housing and the transducer (12).

8. A method for fastening a transducer (12) on a housing (11) of a device, the method
comprising the steps of:
- mounting an adapter (20), especially such as described in any one of the claims 1-5, to vicinity of an acoustically well conductive part (21) of the housing (11); and
- mounting the transducer (12) to the adapter (20), the adapter being equipped with a punctured part (23) for enabling the passage of sound waves to/from the transducer (12) from/to the exterior of the device, the punctured part (23) being adapted to match the acoustically well conductive part (21) of the housing (11).

9. A method according to claim 8,
wherein the housing (11) is a housing of a mobile phone.

10. A method according to claim 8,
wherein the transducer (12) is a loudspeaker.

11. An adapter (20) for fixing and/or attaching a sound waves receiving/transmitting transducer (12) inside a housing (11) of a device, said housing (11) having at least one inlet/outlet aperture (21) in communication with the transducer (12), said adapter (20)
comprising:
- first means (22) for fixing and/or holding the adapter (20) in an inlet/outlet aperture (21) of the housing (11) ;
- second means (13) for holding the transducer (12); and
- third means (23) for acoustically connecting said inlet/outlet aperture (21) to the transducer (12).
